Europäisches Patentamt

European Patent Office

Office européen des brevets

(11) Publication number: **0 290 024 B1**

## EUROPEAN PATENT SPECIFICATION

(45) Date of publication of patent specification: **02.12.92**   (51) Int. Cl.⁵: **G11B 7/085**

(21) Application number: **88107244.1**

(22) Date of filing: **05.05.88**

(54) **An access method of an optical disk drive by means of multi-track jump and a circuit therefor.**

(30) Priority: **07.05.87 JP 112047/87**

(43) Date of publication of application:
**09.11.88 Bulletin 88/45**

(45) Publication of the grant of the patent:
**02.12.92 Bulletin 92/49**

(84) Designated Contracting States:
**DE ES FR GB IT NL SE**

(56) References cited:
**EP-A- 0 158 245**
**DE-A- 3 245 000**
**DE-A- 3 604 604**
**JP-A- 6 254 835**

**SPIE, Optical Mass Data Storage II vol. 695, no. 21, August 1986, Bellingham, WA, USA pages 138 - 140; Everett Bates et al: "Seek Techniques for the Optotech 5984 Optical Disk Drive"**

**JAPANESE JOURNAL OF APPLIED PHYSICS, SUPPLEMENTS. vol. 26, no. 26-4, 16 September 1987, TOKYO JA pages 191 - 194; KATSUHARA et al: "Fine Seek Technique"**

**PATENT ABSTRACTS OF JAPAN vol. 10, no. 173 (P-469)(2229) 18 June 1986, & JP-A-61 22479**

**PATENT ABSTRACTS OF JAPAN vol. 11, no. 68 (P-553)(2515) 28 February 1987, & JP-A-61 230630**

(73) Proprietor: **FUJITSU LIMITED**
**1015, Kamikodanaka Nakahara-ku**
**Kawasaki-shi Kanagawa 211(JP)**

(72) Inventor: **Katsuhara, Wataru**
**San Haitsu S-202, 1205-2 Tomuro**
**Atsugi-shi Kanagawa, 243(JP)**
Inventor: **Arai, Shigeru**
**Huamiru Zushi 101 7-6, Yamanone 1-chome**
**Zushi-shi Kanagawa, 249(JP)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**W-8000 München 22(DE)**

## Description

The present invention relates to an access method of an optical disk drive, and more particularly to a fine and high speed access method in which improved multi-track jump (in other words, it is called as long-range jump) technology is utilized to reach a target track. The access method of an optical disk drive usually consists of two steps, first coarse access and then subsequent fine access. For the coarse access, a stepper motor or a voice coil motor (VCM) is generally used to move a carriage on which an optical head is loaded, however, there are problems of a low precision in positioning the optical head by a stepper motor or difficulty in controlling the velocity of a VCM in order to reach the target track precisely. Therefore, the fine access is needed to be supplemented to reach the target track, wherein a actuator installed in the optical head is utilized and the multi-track jump technology of fine access is applied. After the target track is pulled in, track servo mechanism for the track actuator holds the target track during a subsequent operation.

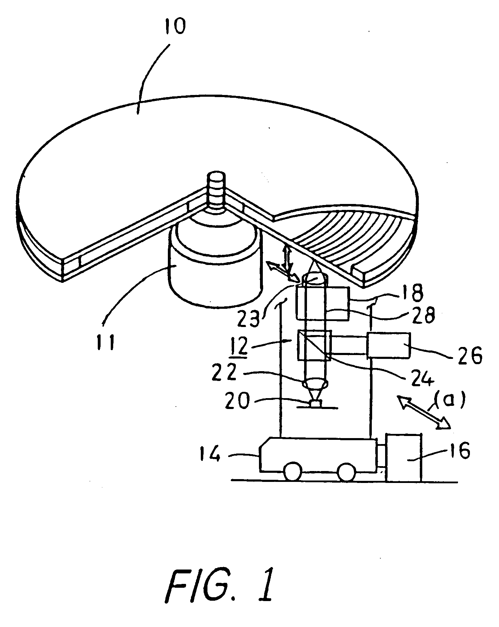

Fig. 1 illustrates schematically a structure of the optical disk drive, especially the relations between an optical disk 10 and an optical head assembly 12. Disk 10 is rotated by spindle motor 11. The optical head assembly 12 is loaded on carriage 14 which is moved by VCM or stepper 16. Optical head assembly 12 comprises actuator 18, laser diode 20, collimator lens 22, object lens 23 on actuator 18, beam splitter 24, and photo detector 26.

Light beam 28 from laser diode 20 is collimated by collimator lens 22 and further focused on optical disk 10 by object lens 23. When the optical disk drive receives a command to access a target track, VCM or stepper 16 moves carriage 14 in a direction of arrow (a) (arrow (a) shows radial direction with regard to disk 10) toward the target track by a control signal from controller. After the movement of an instructed distance of carriage 14, servo mechanism incorporated in the optical disk drive is switched on and an instantaneous track is pulled in. Photo detector 26, receiving reflected light from optical disk 10, detects the present track position and the number of track deviation from the target track is calculated. When the track position is found to be within a range of fine access, coarse access is switched over to fine access.

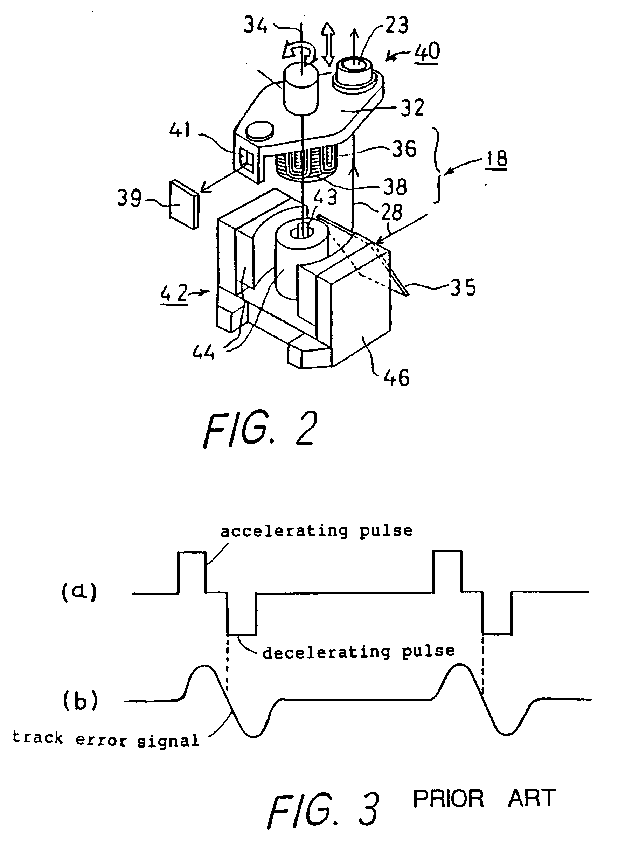

Fig. 2 shows an exploded perspective view of actuator 18. Object lens 23 is fixed on member 32, which is rotatable back and forth around axis 34 by tracking coil 36 attached thereto and also movable up and down axially by focus coil 38. Light beam 28 comes in from right side and is reflected toward object lens 23 by mirror 35. The beam path is different from that shown in Fig. 1 because of attaining compact structure of actuator 18. The actuator head 40 is inserted in magnet subassembly 42, which comprises magnet pole pieces 44 and support yoke 46. Detector 39 is provided to detect a deviation from the neutral position while actuator head 40 is free from actuation. A light source for detector 39 such as LED (light emitting diode, not shown) is fixed inside window 41. One function of actuator 18 is to move the focused beam radially on optical disk 10 during fine access, and another function after fine access is to make the focused beam follow the center way of the target track and to maintain a precise focusing of light beam during read/write operation for the optical disk. The above second function is achieved by an action of servo mechanism even when the beam position shifts inwardly or outwardly due to decentering of optical disk 10. The servo mechanism has further a function of moving object lens 23 in an axial direction and maintain a good focus during servo operation. Therefore, this type of actuator 18 is called as a two-dimensional actuator.

There are many ways of the prior art to move actuator head 40 in fine access. Single-track jump method (in other words, it is called as micro jump method) is the most fundamental and simplest method, wherein a pair of accelerating and decelerating current pulses is applied to the tracking coil 36 of Fig. 2 in order to move the focused beam by one track pitch. The pair of pulses is applied repeatedly, which is shown in Fig. 3(a), each positive and negative pulse being capable of accelerating it during a first half cycle and then decelerating it during the subsequent half cycle. This single track jump is repeated plural times of a specified number.

The focused beam moves radially on optical disk surface by one track pitch responsive to one pair of pulses. This process is repeated while the required track number are counted. Photo detector 26 of Fig. 1 generates the track error signal shown in Fig. 3(b), which is responsive to a relative position of focused beam on the chasing track of optical disk 10, and is utilized to adjust the beam position. Generally each track error signal has a sinusoidal waveform where one period corresponds to a movement of the focused beam across one track pitch between two adjacent tracks. The above single-track jump method has a demerit that the access time to reach the target track requires a long time.

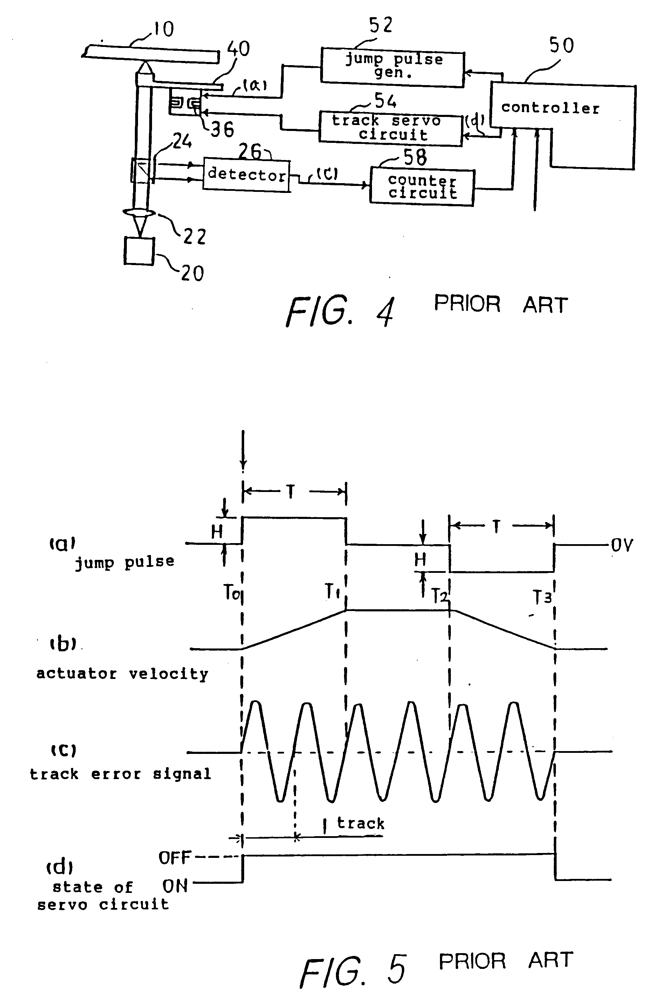

To shorten the access time, multi-track jump methods have been introduced. The methods generally apply the similar basic idea. The principle is explained using Figs. 4 and 5. Fig. 4 shows a schematic block diagram used therefor and Fig. 5 shows the signal waveforms related with the function of Fig. 4.

Throughout the drawings and explanations, hereafter, the same reference numerals used designate and identify the same or similar parts. When the access is switched over to fine access at time T0, controller 50, comprising microcomputer, memory circuit and etc. sends a jump command to jump pulse generator 52 and, at the same time, an open command to track servo circuit 54, both being connected to tracking coil 36 in actuator head 40. Jump pulse such as a rectangular waveform shown in Fig. 5(a) having a duration of T is applied. The jump pulse accelerates actuator head 40 with a specified force for duration T. The rotational velocity of actuator head 40 is increased and then it is maintained as constant from T1 to T2 as shown in Fig. 5(b). At T2, the pulse voltage of reversed polarity having the same absolute height H is applied to tracking coil 36 for duration T, and this decelerates actuator head 40 and brings it to a standstill at T3.

On that moment, track servo circuit 54 is again activated as shown in Fig. 5(d) by a command of a servo control signal from controller 50 and the target track is pulled in. During the access operation, a track error signal shown in Fig. 5(c) is generated in detector 26 and inputted to counter circuit 58. Counter circuit 58 for counting zero crossing points of track error signal is cooperatively connected to controller 50 and the number of tracks to the target track is calculated and controlled. Fig. 5 shows a case in which six tracks are jumped over.

In applying the multi-track jump method, there are two problems to be solved. The first problem is decentering of the optical disk rotation and the second is a spring force effect which influences the movement of actuator head 40 of Fig. 2. The rotating optical disk has a deviation of rotation radius reaching up to 50 to 60 $\mu$m. This deviation is caused by a lack of mechanical precision of optical disk itself during its production and further by a lack of the precision in installing the optical disk on a spindle motor. The above deviation value is much larger than the track pitch such as 1.6 $\mu$m generally used. During the movement of actuator head in fine access, the optical disk rotates forward by a certain angle causing a deviation of the focused beam far away from the estimated track by the decentering, and this causes a failure in fine access.

As for the second problem, actuator head 40 of Fig. 2 is installed on magnet subassembly 42, and is to be rotated freely around axle 43 by activation of tracking coil 36, and is moved axially by focus coil 38. However, these two coils 36, 38 are connected to outside fixed terminals with conductive wires (not shown), which supply driving current.

These connecting wires exert spring forces to the movement of actuator head 40. This spring force functions to pull back the actuator head 40 toward a neutral position during tracking step, and the force increases with a rotation angle of actuator head 40. Therefore, it is necessary to compensate this force by adding a driving current to the tracking coil 36 to avoid the tracking failure.

Several patents have been disclosed to solve the above problems. Japanese Patent Tokukaisho (laid open Patent) 61-22479 dated on Jan. 31, 1986 discloses the compensation method for decentering of optical disk in multi-track jump. Japanese Patent Tokukaisho 62-54835 dated on March 10, 1987 discloses that the durations of accelerating and decelerating jump pulses are adjusted by measuring the velocity of actuator. Japanese Patent Tokukaisho 60-205836 dated on Oct. 17, 1985 discloses the compensation method of spring force by flowing gradually increasing compensating current to tracking coil during multi-track jump, however, the patent does not deal with the decentering of optical disk. Japanese Patent Tokukaisho 61-230630 dated on Oct. 14, 1986 discloses the compensation method for both spring force and decentering of optical disk, however, it seems to be difficult to compensate the decentering of optical disk in case of a long-range jump.

In the above described methods, the estimated track error is compensated gradually during a whole jump range, therefore, if the multi-track jump is especially a long range such as more than 100 tracks, it seems to become difficult to access the target track without a failure when both decentering of optical disk and spring force should be compensated.

A completely different technology has been disclosed in the following reference, disclosing the precharacterising features of claim 1:

"Seek techniques for the Optotech 5984 optical disk drive" by Everett Bates and et al. SPIE Vol. 695, Optical Mass Data Storage, 1986.

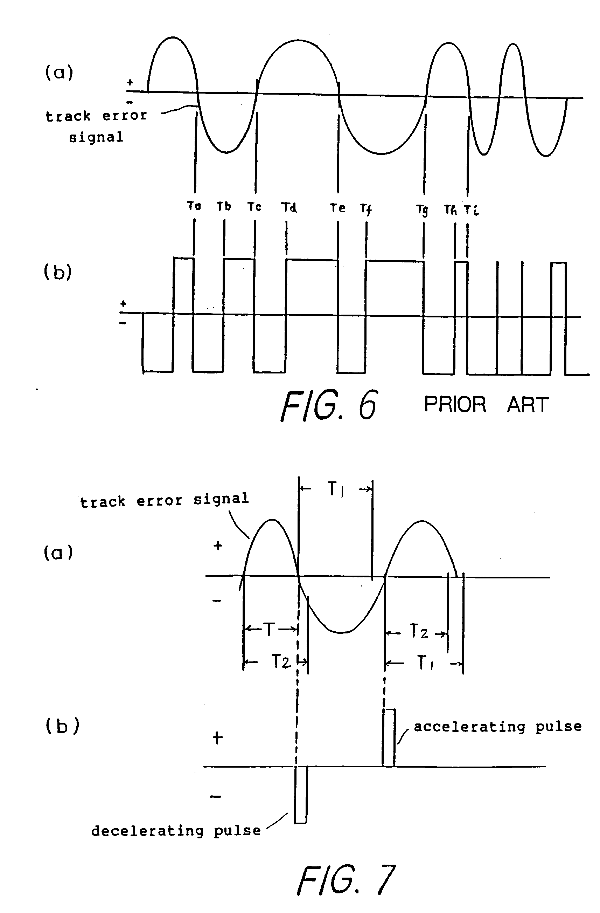

The outline of the reference is summarized using Figs. 6(a) and 6(b). Fig. 6(a) shows a track error signal after the initial acceleration jump pulse. Track error signal is the similar curve as shown in Fig. 5(c). When assumed that the velocity of actuator head after acceleration jump is set up to require $T_0$ such as 100 micro seconds to cross one half track pitch, each duration of Ta to Tc, Tc to Te, Te to Tg, and etc. of Fig. 6(a) should be 100 micro seconds ideally. In an actual case, it deviates shorter or longer from this value. The reference discloses that every time when the track error signal crosses zero level, a decelerating pulse is applied, the pulse having a width of approximately half duration of $T_0$, in this case, 50 micro seconds. And then, during the remaining time $T_0$-50 micro

seconds, the accelerating pulse having the same amplitude is applied. This is shown in Fig. 6(b). All decelerating pulses of Ta to Tb, Tc to Td, Te to Tf, and Tg to Th have the same pulse width and height. In Fig. 6, the pulse width of Tb to Tc is 50 micro seconds, the widths of Td to Te, and Tf to Tg are longer than 50 micro seconds and the width of Th to Ti is shorter than 50 micro seconds. As a result, when the optical head moves faster than set up value, it is decelerated. And on the contrary, when it moves slower than the set up value, it is accelerated. Thus the travel time to cross a half track pitch is adjusted to maintain almost constant throughout fine access. However, this method has a weak point when the track error signal includes a noise pulse. When the noise pulse crosses zero level, it works to generate another decelerating pulse successively, therefore, the actuator is too much decelerated over the expected velocity.

It is a general object of the invention, therefore to provide a fine access method and a circuit therefor by means of multi-track jump covering a wide range of ± 400 $\mu$m.

It is another object of the invention to provide the fine access method and the circuit of a high-speed such as less than 20 milli-seconds for a 100 track jump.

It is still another object of the invention to provide the fine access method and the circuit in which the target track can be tracked precisely avoiding the effects of both decentering of disk rotation and spring force.

It is still another object of the invention to provide the fine access method and the circuit in which the fine access is not affected very much by the noise superposed on a tracking error signal.

It is still further object of the invention to provide the access method and the circuit, wherein a coarse access is necessary only to move among user areas and unnecessary within a memory area assigned to a specific user when memory regions on an optical disk are properly assigned to individual user.

The access method of the present invention includes the steps of the characterising portion of claim 1.

Fig. 7 shows an example of waveforms which explain the above method of the present invention. Fig. 7(a) shows a track error signal which has a changing width between two zero crossing points. Because the duration of the first half cycle is shorter than T2, then the decelerating pulse shown in Fig. 7(b) is generated and the actuator head of optical head assembly is decelerated. On the other hand, the duration of the second half cycle of track error signal is longer than T1, then the accelerating pulse is generated and actuator head is accelerated. As for the third half cycle, the duration is an intermediate value between T1 and T2, therefore no pulse is generated.

Accelerating pulse and decelerating pulse have always the same pulse width and the same height of the reversed polarity. Actuator head traverses plural tracks of a long-range on disk maintaining the crossing time of each track pitch almost constant, even when the disk rotation is influenced by decentering and further the actuator receives the spring force previously explained. When the actuator head position reached a close vicinity of the target track, the final deceleration jump pulse is applied, which corresponds to the initial acceleration jump pulse and is capable of bringing the actuator head to a standstill. And then the servo mechanism is switched on, making the beam precisely follow the center of the target track.

The above method enables the optical head to perform quite a long-range jump access with high speed and to pull in at the target track without a failure, and further the method is not much affected by a noise superposed on track error signal. The noise causes generation of an excess decelerating pulse, but the pulse used in the present invention does not cause the actuator a large velocity change.

Other objects and advantages of the present invention will become apparent from the detailed description to follow taken in conjunction with the appended claims.

Fig. 1 shows schematically a structure of the optical disk, especially the relation between optical disk and optical head assembly,

Fig. 2 shows an exploded perspective view of the actuator,

Fig. 3 shows waveforms to explain the fine access method of the prior art, wherein waveform (a) shows a pair of accelerating and decelerating pulses which is repeated one by one, and waveform (b) shows the corresponding track error signal,

Fig. 4 shows a block diagram of the basic composition for driving the actuator in fine access,

Fig. 5 shows waveforms in multi-track jump method of the prior art, wherein waveform (a) shows jump pulses for driving the actuator; (b), actuator velocity curve; (c), track error signal; and (d), on and off states of track servo circuit,

Fig. 6 shows waveforms of multi-track jump applied in Optotech, wherein waveform (a) shows track error signal and waveform (b) shows compensating pulses to accelerate and decelerate the actuator alternately,

Fig. 7 shows waveforms which explain the principle of the present invention, wherein, when track error signal (a) has zero crossing interval shorter than T2, decelerating pulse shown by (b) is sent to the actuator, and when T is longer than T1, accelerating pulse is sent,

Fig. 8 shows a block diagram, wherein the details of of the fine access method of the present invention are shown,

Fig. 9 shows time charts of the signals which appear at several points in Fig. 8,

Fig. 10 shows a detailed circuit of pulse generator 82 of Fig. 8,

Fig. 11 shows several samples of velocity change after velocity compensation pulse is applied according to the present invention, wherein Fig. 11(a) shows a case only one reference time is used in comparison, and Fig. 11(b) shows a case two reference times are used.

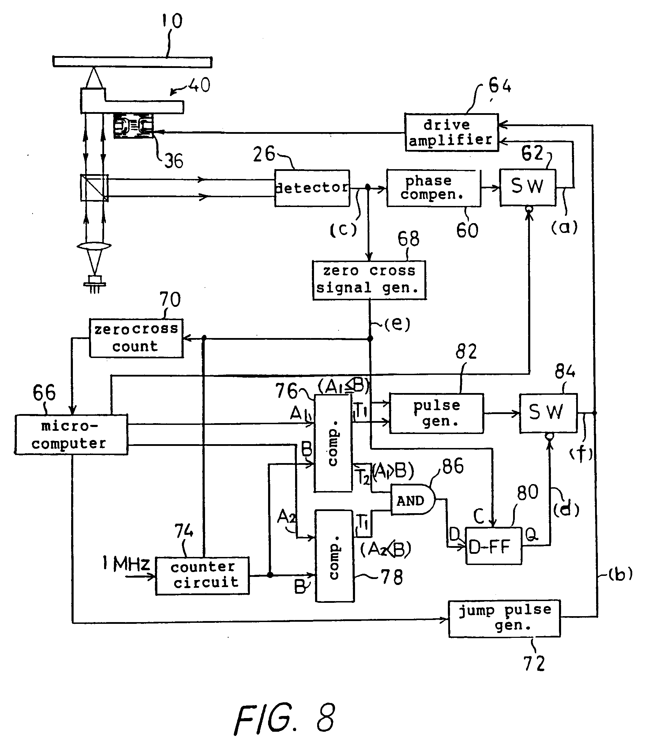

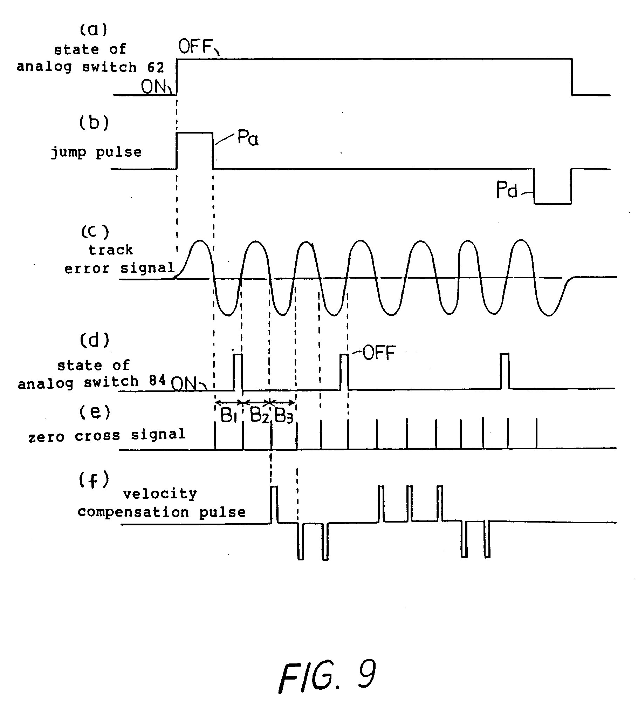

Fig. 8 shows a block diagram of the embodiment of the present invention, wherein a part of optical head assembly 12 and optical disk 10 of Fig. 1 are schematically supplemented to illustrate the relation with the circuit of fine access. In Fig. 8, the servo circuit which drives focus coil 38 of Fig. 2 is omitted because the present invention is not directly related with focus servo system. Fig. 9 shows a time chart to explain the details of operation of Fig. 8.

During read/write period while the beam is following the target track, servo system operates in such a way that analog switch 62 is on state as shown in Fig. 9(a) controlled by a command from microcomputer 66. Detector 26 detects displacement of the focused beam from the chasing track and generates track error signal, and track error signal is then inputted to phase compensator 60 and further to drive amplifier 64 via analog switch 62. Amplified signal drives tracking coil 36 so as the focused beam not to go out of the target track. Phase compensator 60 is needed for a feed back loop of the servo system to work stably.

When microcomputer 66 receives a seek command to access a different track which can be accessible within fine access, analog switch 62 is switched off and the circuit for the fine access according to the present invention begins to work shown in a lower half of Fig. 8.

Track error signal has a waveform (c) shown in Fig. 9, and this signal is inputted to zero cross signal generator 68. Zero cross signal generator 68 generates pulse signal (e) shown in Fig. 9 each time when track error signal crosses zero level. Zero cross signal generator 68 can be made of a circuit comprising such as a comparator, one-shot multivibrator and other logics, whereby one-shot pulse is generated each time when a level of track error signal goes up above and goes down below the zero level of the track error signal. Zero cross signal (e) is inputted to zero cross count circuit 70 and therein the number of tracks traversed from the start of access is counted and transmitted to microcomputer 66.

Immediately after analog switch 62 in servo loop is switched off, microcomputer 66 sends a command to jump pulse generator 72, and an accelerating pulse Pa (b) shown in Fig. 9 is outputted to drive amplifier 64 and therethrough to tracking coil 36, and tracking coil 36 accelerates actuator head 40 during the pulse Pa. Jump pulse generator 72 has further a function of generating decelerating pulse Pd after the number of tracks to be traversed in the seek process is counted out. Decelerating pulse Pd has the reversed polarity which decelerates actuator head 40 to a standstill.

Counter circuit 74 is provided which is driven by a clock signal of such as 1 MHz and is reset by each pulse of zero cross signal. The time interval B, which begins at the reset pulse and ends at the next reset pulse, is measured by the number of clock signal, therefore, value B increases gradually and reaches at the final value B responsive to the time between two adjacent pulses of the zero cross signal (e). This is repeated every time of incoming reset signal of zero cross signal.

On the other hand, microcomputer 66 outputs reference time intervals A1 and A2 (A1>A2), wherein reference value A1 and A2 are selected such that final value B corresponding to the measured actuator head velocity is subsequently compensated to fall within the range between A1 and A2. Because the final value B corresponds to the time for the actuator head to traverse a half track pitch, the value B increases as the velocity of actuator head becomes slower. The measured value B is preferable to satisfy the condition of A1>B>A2 every time to traverse a half track pitch.

Instantaneous interval value B is inputted to both comparators 76, 78, and the value B grows until the counter circuit 74 is reset. In comparator 76, value B is compared with A1, and when B becomes equal to or greater than A1, logical level of terminal T1 of comparator 76 shows "H" level and logical level of terminal T2 shows "L" level. And if this condition is not satisfied, logical levels are opposite.

In comparator 78, B and A2 values are compared with each other. Terminal T1 shows logical level "H" only when the condition of A2<B is satisfied, otherwise it shows logical level "L". Therefore, AND circuit 86 outputs logical level "H" only when A1>B>A2 condition is satisfied. Under this condition, output Q of D-type flip-flop 80 changes its logical level to "H", which is controlled by zero cross signal, inputted to clock terminal of D-type flip-flop 80, and then analog switch 84 opens the circuit from pulse generator 82 to drive amplifier 64 to send velocity compensation pulse.

The output at terminal T1 of comparator 76 maintains logical level "L" at first because time interval B starts to increase from the input moment of reset pulse of zero cross signal (e). When the velocity of actuator head is slow, then value B increases up to the level $B \geq A1$. Under this condition, logical level of T1 changes to "H", and when the next pulse of zero cross signal is inputted to clock terminal of pulse generator 82, it generates one-shot positive pulse. However, in case the velocity of actuator head is faster and the next pulse of zero cross signal is inputted to clock terminal while logical level of T1 is maintaining "L" level ($B < A1$), pulse generator 82 generates one-shot negative pulse.

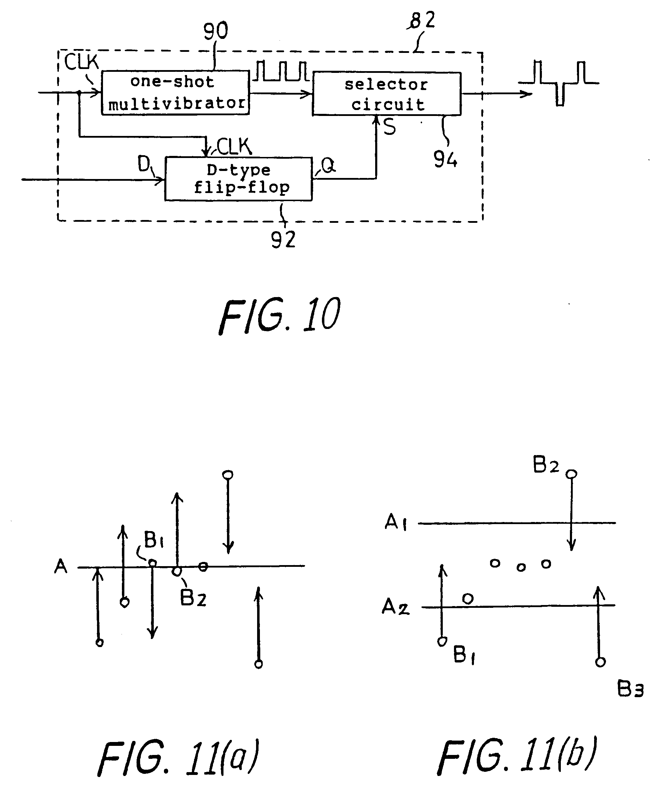

Pulse generator 82 can be made, for example, using a circuit as shown in Fig. 10, wherein one-shot multivibrator 90, D-type flip-flop 92 and selector circuit 94 are used. One-shot multivibrator 90 generates a single pulse every time when it is triggered by down edge of zero cross signal. D-type flip-flop 92 outputs the same logical level as that of D terminal (connected to terminal T1 of comparator 76) at up edge of zero cross signal. And selector circuit 94 has a function to invert the sign of its polarity of the inputted pulse depending on the logical level inputted to its selector terminal S from D-type flip-flop 92. Thus, one-shot positive and negative pulses having the same absolute height and the same width can be obtained.

With regard to the case $B < A1$ and further $B > A2$ conditions are satisfied, T2 terminal of comparator 76 and T1 terminal of comparator 78 show logical level "H". Because both inputs to AND circuit 86 are "H" level and, therefore, its output is "H" level, then D-type flip-flop 80 outputs "H" level. And analog switch 84 is opened and one-shot negative pulse is interrupted to be transmitted to drive amplifier 64. For example, interval values B are taken as B1, B2, B3 as shown in Fig. 9(e). When the condition $A1 > B1 > A2$ is satisfied, analog switch 84 is opened, which is shown by the state of analog switch 84 in Fig. 9(d), no velocity compensation pulse is outputted as shown in Fig. 9(f). For case of $B2 > A1$, accelerating pulse is outputted, and for case of $B3 < A2$, decelerating pulse is outputted. The timing of generation of one-shot pulse and opening of analog switch 84 should be ahead of reset timing of counter circuit 74. Timing can be controlled, for example, by utilizing either up edge or down edge of the pulse of zero cross signal (e).

For a case of $A1 > B > A2$ which means actuator head velocity is within a range between first and second reference velocities, no compensation pulse is applied to actuator coil 36. In case of $B \geq A1$, A2 which means actuator head velocity is slower than the first reference velocity, accelerating one-shot pulse is applied thereto. For a case of $B \leq A1$, A2 which means actuator head velocity is faster than the second reference velocity, decelerating one-shot pulse is applied thereto.

Thus the velocity of actuator head is controlled to be within the target range between two reference values A1 and A2. After the specified number of tracks is counted out in zero cross count circuit 70 in Fig. 8, jump pulse generator 72 is triggered to send negative pulse Pd shown in Fig. 9(b) and actuator head is decelerated to a standstill, then immediately analog switch 62 is closed, activating the servo loop.

In the above embodiment, two reference values of A1 and A2 are set up for controlling the velocity of actuator head. Of course, A1 may be set up to be equal to A2 ($A1 = A2 = A$), which means that actuator head is accelerated for a case $B > A$ and it is decelerated for a case $B < A$. In this case, comparator 78 and AND circuit 86 are unnecessary, and three terminals $A < B$, $A = B$, and $A > B$ of comparator 76 are utilized. However, the velocity compensation is enforced at almost every half track traverse, and convergence of deviations from the target speed is not so good when compared with the two-reference value method. Fig. 11(a) shows the velocity change after compensation, data having the measured velocity B1 or B2 goes apart from the target velocity A. Therefore the stability of jump movement in this method is inferior to the two-reference value method. On the contrary, Fig. 11(b) shows that, when velocity target zone ranging from A1 to A2 is set up, measured velocity data such as B1, B2, and B3 located out of this zone converges within the target zone after compensation.

Access method of the present invention does not intend to control actuator head rigorously. The purpose of the method is to keep the velocity within a range where the track servo mechanism can pull into the target track. This flexibility allows the use of pulses with fixed height and width to compensate the velocity deviation caused by such as decentering of disk rotation and the wire spring forces.

One of the merits of using fixed pulses is that the velocity change after compensation is limited within an acceptable value even when there is an error in detecting the velocity. The method applied in the Optotech 5984 by Everett Bates and etal. explained in the prior art uses a large pulse width to decelerate the actuator head, therefore, if the track error signal comprises a noise pulse, the actuator head is too much decelerated and, in some case, it becomes impossible to control the actuator head. On the other hand, the method of the present invention can provide a wider control range of velocity.

Multi-track jump method according to the present invention is very stable, and the probability that the beam can not pulled into the target track is less than $10^{-4}$. Moreover, beam velocity can be made five times as fast as the velocity of repeating the single-track jump. The access time is considerably shortened with this method, and the data such as 20 milli-seconds per $+/-100$ tracks is obtained.

**Claims**

1. An access method for the head actuator (40) of an optical disc drive having a tracking servo circuit, wherein the head jumps over a plurality of tracks, the method comprising:
   - disconnecting the tracking servo circuit (60, 62, 64),
   - applying a single jump pulse of a first polarity to the head actuator for accelerating the actuator,
   - measuring each interval (T) for said actuator to traverse a predetermined track pitch, said interval being the duration between two zero crossings of the tracking error signal,
   - applying another pulse of a polarity opposite to the first polarity to the head actuator for decelerating the actuator to a standstill at the end of said access,
   - connecting the tracking servo circuit again;
     the method characterised by:
   - comparing said measured interval (T) with a first predetermined reference time $(T_1)$ and applying an accelerating pulse of fixed duration to the actuator when the measured interval is longer than the first predetermined reference time,
   - comparing said measured interval (T) with a second predetermined reference time $(T_2)$, wherein $T_2 \leq T_1$, and applying a decelerating pulse of fixed duration to the actuator when the measured interval is shorter than the second predetermined reference time.

2. The method according to claim 1, wherein said method further comprises that said accelerating pulse has the same width and amplitude as the decelerating pulse.

3. The method according to claim 1 or 2, wherein said method further comprises that said predetermined track pitch is a half track pitch.

4. The method according to any one of claims 1 to 3, wherein said method further comprises that said accelerating and decelerating pulses have a much shorter pulse width than said jump pulse.

5. The method according to any one of claims 1 to 4, said method further comprising the step of:
   applying no one-shot accelerating or decelerating pulse when said measured interval is not longer than said first predetermined reference time and is not shorter than said second predetermined reference time, respectively.

6. The method according to any one of claims 1 to 5, wherein said method further comprises that said first and second predetermined reference time are substantially equal.

7. An optical disc drive having a head actuator (40) for moving the head across the surface of an optical disc and having a tracking servo circuit (60, 62, 64) for the head, the disc drive comprising:
   - means for disconnecting the tracking servo circuit,
   - means (72) for applying a single jump pulse of a first polarity to the actuator for accelerating it and making it traverse a plurality of tracks and for applying another pulse of a polarity opposite to the first polarity for decelerating the actuator to a standstill,
   - counting means (74) for measuring the interval (T) for said actuator to traverse a predetermined track pitch, said interval being the duration between two zero crossings of the tracking error signal,
   - means for connecting the tracking servo circuit;
     characterised by
   - a first comparator (76) for comparing said interval with a first predetermined reference time $(T_1)$,
   - a second comparator (78) for comparing said interval with a second predetermined reference time $(T_2)$, wherein $T_1 \leq T_2$,
   - pulse generating means (82) for generating an accelerating pulse of fixed duration when the measured interval is longer than the first predetermined reference time and for generating a decelerating pulse of fixed duration when the measured interval is shorter than the second predetermined reference time.

8. A disk drive according to claim 7, wherein said first and second comparator (76, 78) are simplified into one comparator, whereby said first and second predetermined reference time are one single predetermined reference time, and whereby pulse generator means (82) generates either an accelerating or a decelerating pulse to said head actuator (40), depending on each said measured interval being longer or shorter, respectively, than said single predetermined reference time.

9. A disk drive according to claim 7 or 8, wherein said pulse generating means comprises a pulse generator (82) which generates a pulse of either positive or negative polarity triggered by the zero crossing of the tracking error signal, said polarity being selected on a polarity of an inputted signal thereto, and further comprises an analog switch (84), and AND circuit (86) and a D-type flip-flop (80), wherein the output of said pulse generator (82) is connected to said analog switch (84), and inputs of said AND circuit (86) are connected to each selected output of said first and second comparator circuits (76, 78) and the input (D) of said D-type flip-flop (80) is connected to the output of said AND circuit (86) and the output (Q) of said D-type flip-flop (80) is connected to a control terminal of said analog switch (84), whereby the output of said analog switch (84) outputs said positive or negative one-shot pulse depending on each said measured interval being longer than said first reference time or shorter than said second reference time, respectively, and outputs no pulse when said measured interval is between said first and second predetermined reference times.

**Patentansprüche**

1. Zugriffs-Methode für eine Kopf-Betätigungseinrichtung (40) eines Antriebs für eine optische Platte, der eine Spurverfolgungs-Servoschaltung hat, wobei der Kopf über eine Vielzahl von Spuren springt, welche Methode Schritte umfaßt zum
   - Abschalten der Spurverfolgungs-Servoschaltung (60, 62, 64),
   - Anlegen eines einzigen Sprung-Impulses einer ersten Polarität an die Kopf-Betätigungseinrichtung zum Beschleunigen der Betätigungseinrichtung,
   - Messen jedes Intervalls (T) für die Betätigungseinrichtung zum Überqueren eines vorbestimmten Spur-Abstands, welches Intervall die Dauer zwischen zwei Nulldurchgängen des Spurverfolgungsfehler-Signals ist,
   - Anlegen eines weiteren Impulses einer Polarität, die der ersten Polarität entgegengesetzt ist, an die Kopf-Betätigungseinrichtung zum Verzögern der Betätigungseinrichtung bis zu einem Stillstand am Ende des Zugriffs,
   - Wiederanschalten der Spurverfolgungs-Servoschaltung,
welches Verfahren **gekennzeichnet** ist durch Schritte zum
   - Vergleichen des gemessenen Intervalls (T) mit einer ersten vorbestimmten Referenzzeit ($T_1$) und Anlegen eines Beschleunigungs-Impulses einer festgelegten Dauer an die Betätigungseinrichtung, wenn das gemessene Intervall länger als die erste vorbestimmte Referenzzeit ist,
   - Vergleichen des gemessenen Intervalls (T) mit einer zweiten vorbestimmten Referenzzeit ($T_2$), wobei $T_2 \leq T_1$ ist, und Anlegen eines Verzögerungs-Impulses einer festgelegten Dauer an die Betätigungseinrichtung, wenn das gemessene Intervall kürzer als die zweite vorbestimmte Referenzzeit ist.

2. Methode nach Anspruch 1, wobei für die Methode ferner vorgesehen ist, daß der Beschleunigungs-Impuls die gleiche Breite und die gleiche Amplitude wie der Verzögerungs-Impuls hat.

3. Methode nach Anspruch 1 oder 2, wobei für die Methode ferner vorgesehen ist, daß der vorbestimmte Spur-Abstand ein halber Spur-Abstand ist.

4. Methode nach einem der Ansprüche 1 bis 3, wobei für die Methode ferner vorgesehen ist, daß die Beschleunigungs- und Verzögerungs-Impulse eine viel kürzere Impulsbreite als der Sprung-Impuls haben.

5. Methode nach einem der Ansprüche 1 bis 4, welche Methode ferner den Schritt unfaßt zum Unterdrücken des Anlegens eines Einmal-Beschleunigungs- oder oder Verzögerungs-Impulses, wenn das gemessene Intervall nicht länger als die erste vorbestimmte Referenzzeit bzw. nicht kürzer als die zweite vorbestimmte Referenzzeit ist.

6. Methode nach einem der Ansprüche 1 bis 5, wobei für die Methode ferner vorgesehen ist, daß die erste und die zweite vorbestimmte Referenzzeit im wesentlichen gleich sind.

7. Antrieb für eine optische Platte, der eine Kopf-Betätigungseinrichtung (40) zum Bewegen des Kopfes quer über die Oberfläche einer optischen Platte und eine Spurverfolgungs-Servoschaltung (60, 62, 64) für den Kopf hat, welcher Kopf-Antrieb umfaßt:
   - ein Mittel zum Abschalten der Spurverfolgungs-Servoschaltung,
- ein Mittel (72) zum Anlegen eines einzigen Sprung-Impulses einer ersten Polarität an die Betätigungseinrichtung zum Beschleunigen derselben und um sie eine Vielzahl von Spuren überqueren zu lassen und zum Anlegen eines weiteren Impulses einer Polarität, die der ersten Polarität entgegengesetzt ist, zum Verzögern der Betätigungseinrichtung bis zu einem Stillstand,
- ein Zählmittel (74) zum Messen des Intervalls (T) für die Betätigungseinrichtung zum Überqueren eines vorbestimmten Spur-Abstands, wobei das Intervall zwischen zwei Nulldurchgängen des Spurverfolgungsfehler-Signals liegt,
- ein Mittel zum Anschalten der Spurverfolgungs-Servoschaltung **gekennzeichnet** durch
- einen ersten Komparator (76) zum Vergleichen des Intervalls mit einer ersten vorbestimmten Referenzzeit ($T_1$),
- einen zweiten Komparator (78) zum Vergleichen des Intervalls mit einer zweiten vorbestimmten Referenzzeit ($T_2$), wobei $T_1 \leq T_2$ ist,
- ein Impuls-Erzeugungsmittel (82) zum Erzeugen eines Beschleunigungs-Impulses einer festgelegten Dauer, wenn das gemessene Intervall länger als die erste vorbestimmte Referenzzeit ist, und zum Erzeugen eines Verzögerungs-Impulses einer festgelegten Dauer, wenn das gemessene Intervalls kürzer als die zweite vorbestimmte Referenzzeit ist.

8. Antrieb für eine Platte nach Anspruch 7, bei dem der erste und der zweite Komparator (76, 78) vereinfachend zu einem Komparator zusammengefaßt sind, wodurch die erste und die zweite vorbestimmte Referenzzeit eine einzige vorbestimmte Referenzzeit sind und wodurch das Impuls-Erzeugungsmittel (82) entweder einen Beschleunigungs-Impuls oder einen Verzögerungs-Impuls für die Kopf-Betätigungseinrichtung (40) abhängig von jedem gemessenen Intervall, das länger bzw. kürzer als die einzige vorbestimmte Referenzzeit ist, erzeugt.

9. Antrieb für eine Platte nach Anspruch 7 oder 8, bei dem das Impuls-Erzeugungsmittel umfaßt: einen Impuls-Generator (82), der einen Impuls von entweder positiver oder negativer Polarität getriggert durch den Nulldurchgang des Spurverfolgungsfehler-Signals erzeugt, wobei die Polarität aufgrund einer Polarität eines ihm eingegebenen Signals ausgewählt wird, und ferner einen analogen Schalter (84), eine UND-Schaltung (86) und ein D-Flipflop (80), wobei der Ausgang des Impuls-Generators (82) mit dem analogen Schalter (84) verbunden ist, die Eingänge der UND-Schaltung (86) mit jedem ausgewählten Ausgang der ersten und der zweiten Komparator-Schaltung (76, 78) verbunden sind, der Eingang (D) des D-Flipflop (80) mit dem Ausgang der UND-Schaltung (86) verbunden ist und der Ausgang (Q) des D-Flipflop (80) mit einem Steueranschluß des analogen Schalters (84) verbunden ist, wodurch der Ausgang des analogen Schalters (84) den positiven oder negativen Einmal-Impuls abhängig von jedem gemessenen Intervall, das länger als die erste Referenzzeit bzw. kürzer als die zweite Referenzzeit ist, ausgibt und keinen Impuls ausgibt, wenn das gemessene Intervall zwischen der ersten und der zweiten vorbestimmten Referenzzeit liegt.

**Revendications**

1. Procédé d'accès de l'actionneur de tête (40) d'un lecteur de disque optique comprenant un circuit d'asservissement de piste, dans lequel la tête saute sur plusieurs pistes, procédé consistant essentiellement :
à déconnecter le circuit d'asservissement de piste (60, 62, 64),
à appliquer une seule impulsion de saut de première polarité à l'actionneur de tête pour accélérer l'actionneur,
à mesurer chaque intervalle (T) dudit actionneur pour franchir un pas de piste prédéterminé, ledit intervalle étant la durée entre deux passages par zéro du signal d'erreur d'alignement,
à appliquer une autre impulsion d'une polarité opposée à la première polarité, à l'actionneur de tête pour ralentir l'actionneur jusqu'à un arrêt à la fin dudit accès,
à connecter à nouveau le circuit d'asservissement de piste,
procédé caractérisé en ce qu il consiste en outre :
à comparer ledit intervalle mesuré (T) avec une premier temps de référence prédéterminé ($T_1$) et à appliquer une impulsion d'accélération de durée fixe à l'actionneur quand l'intervalle mesuré est plus long que le premier temps de référence prédéterminé,
à comparer ledit intervalle mesuré (T) avec un second temps de référence prédéterminé ($T_2$), où $T_2 \geq T_1$ et à appliquer une impulsion de décélération d'une durée fixe à l'actionneur quand l'intervalle mesuré est plus court que le second temps de référence prédéterminé.

**2.** Procédé selon la revendication 1, dans lequel ledit procédé consiste également en ce que ladite impulsion d'accélération a la même durée et la même amplitude que l'impulsion de décélération.

**3.** Procédé selon la revendication 1 ou 2, dans lequel ledit procédé consiste en outre en ce que ledit pas de piste prédéterminé est un pas de demi-piste.

**4.** Procédé selon l'une quelconque des revendications 1 à 3, dans lequel ledit procédé consiste également en ce que lesdites impulsions d'accélération et de décélération ont une durée beaucoup plus courte que ladite impulsion de saut.

**5.** Procédé selon l'une quelconque des revendications 1 à 4, ledit procédé consistant en outre :

à n'appliquer aucune seule impulsion d'accélération ou de décélération quand ledit intervalle mesuré n'est pas plus long que ledit premier temps de référence prédéterminé et n'est pas plus court que ledit second temps de référence prédéterminé respectivement.

**6.** Procédé selon l'une quelconque des revendications 1 à 5, dans lequel ledit premier et ledit second temps de référence prédéterminés sont pratiquement égaux.

**7.** Lecteur de disque optique comprenant un actionneur de tête (40) destiné à déplacer la tête en travers de la surface d'un disque optique et comprenant un circuit d'asservissement de piste (60, 62, 64) pour la tête, le lecteur de disque comportant :

un dispositif de déconnexion du circuit d'asservissement de piste,

un dispositif (72) destiné à appliquer une seule impulsion de saut d'une première polarité à l'actionneur pour l'accélérer et faire en sorte qu'il franchisse plusieurs pistes et pour appliquer une autre impulsion de polarité opposée à la première polarité pour décélérer l'actionneur jusqu'à l'arrêt,

un dispositif de comptage (74) destiné à mesurer l'intervalle (T) pendant lequel ledit actionneur franchit un pas de piste prédéterminé, ledit intervalle étant la durée entre deux passages par zéro du signal d'erreur de piste,

un dispositif de connexion du circuit d'asservissement de piste ; caractérisé en ce qu'il comporte ;

un premier comparateur (76) destiné à comparer ledit intervalle avec un premier temps de référence prédéterminé ($T_1$),

un second comparateur (78) destiné à comparer ledit intervalle avec un second temps de référence prédéterminé ($T_2$), dans lequel $T_1 \leq T_2$,

un dispositif générateur d'impulsion (82) destiné à produire une impulsion d'accélération de durée fixe quand l'intervalle mesuré est plus long que le premier temps de référence prédéterminé et pour produire une impulsion de décélération de durée fixe quand l'intervalle mesuré est plus court que le second temps de référence prédéterminé.

**8.** Lecteur de disque selon la revendication 7, dans lequel ledit premier et ledit second comparateurs sont simplifiés en un comparateur, de manière que ledit premier et ledit second temps de référence prédéterminés soient un seul temps de référence prédéterminé et dans lequel un dispositif générateur d'impulsion (82) produise une impulsion d'accélération ou une impulsion de décélération pour ledit actionneur de tête (40) suivant que chacun dudit intervalle mesuré est plus long ou plus court respectivement que ledit seul temps de référence prédéterminé.

**9.** Lecteur de disque selon la revendication 7 ou 8, dans lequel ledit dispositif générateur d'impulsion comporte un générateur d'impulsion (82) qui produit une impulsion de polarité positive ou négative, déclenchée par le passage par zéro du signal d'erreur de piste, ladite polarité étant choisie sur la polarité d'un signal qui lui est appliqué et comportant en outre un commutateur analogique (84), et un circuit ET (86) et un circuit bistable (80) du type D dans lequel la sortie dudit générateur d'impulsion (82) est connectée audit commutateur analogique (84) et les entrées dudit circuit ET (86) sont connectées à chaque sortie sélectionnée dudit premier et dudit second circuits comparateurs (76, 78) et l'entrée (D) dudit circuit bistable (80) du type D est connectée à la sortie dudit circuit ET (86) et la sortie (Q) dudit circuit bistable (80) du type D est connectée à une borne de commande dudit commutateur analogique (84) de manière que la sortie dudit commutateur analogique (84) émette ladite seule impulsion positive ou négative suivant que ledit intervalle mesuré est plus long que ledit premier temps de référence ou plus court que ledit second temps de référence respectivement et n'émette aucune impulsion quand ledit intervalle mesuré se situe entre ledit premier et ledit second temps de référence pré-

déterminé.

FIG. 1

FIG. 2

accelerating pulse

(a)

decelerating pulse

(b)

track error signal

FIG. 3  PRIOR ART

## FIG. 4 PRIOR ART

(a) jump pulse

(b) actuator velocity

(c) track error signal

(d) state of servo circuit

## FIG. 5 PRIOR ART

EP 0 290 024 B1

(a)

track error
signal

Ta Tb Tc Td Te Tf Tg Th Ti

(b)

*FIG. 6*   PRIOR ART

track error signal

(a)

T₁

T

T₂

T₂

T₁

(b)

accelerating pulse

decelerating pulse

*FIG. 7*

15

FIG. 8

FIG. 9

FIG. 10

FIG. 11(a)

FIG. 11(b)